# EUROPÄISCHE PATENTSCHRIFT

(11) **EP 1 878 633 B1**
(45) Veröffentlichungstag und Bekanntmachung des Hinweises auf die Patenterteilung: **31.08.2011**
(21) Anmeldenummer: 07010202.5
(22) Anmeldetag: 23.05.2007
(51) Int. Cl.: B62B 3/06, B62B 3/00, B29C 65/00

(54) **Anordnung zum Aufnehmen und Übergeben und/oder Transportieren wenigstens eines Funktionsteils einer technischen Einrichtung**
Assembly for grappling, transferring and/or transporting at least one functional part of a technical device
Agencement destiné à la réception, au transfert et/ou au transport d'au moins une pièce d'une machine

(30) Priorität: 13.07.2006 DE 202006010803 U
(43) Veröffentlichungstag der Anmeldung: 16.01.2008
(73) Patentinhaber: Jörg von Seggern Maschinenbau GmbH, 26133 Oldenburg (DE)
(72) Erfinder: Von Seggern, Jörg, 26133 Oldenburg (DE)
(74) Vertreter: Jabbusch, Matthias

(56) Entgegenhaltungen:
- DE-A1- 3 546 077
- DE-A1- 10 154 743
- DE-A1- 10 209 000
- DE-A1-102005 035 920
- DE-C- 876 360
- DE-C1- 3 320 959
- US-B1- 6 454 512

## Beschreibung

Die Erfindung betrifft eine Anordnung gemäß dem Oberbegriff des Anspruchs 1.

Technische Einrichtungen weisen verschiedene Funktionsteile auf. Handelt es sich bei einer technischen Einrichtung um eine Einrichtung zum automatischen Versiegeln von Behältern, so weist diese Einrichtung wenigstens ein Werkzeug zum Versiegeln der Behälter auf. Bei diesem Werkzeug handelt es sich beispielsweise um ein Folienschweißgerät, das in ein Unterwerkzeug und in ein Oberwerkzeug unterteilt sein kann. Mit dem Unterwerkzeug werden zu versiegelnde Behälter gegen das Oberwerkzeug geführt, wobei zwischen den Behältern und dem Oberwerkzeug eine Folie angeordnet ist, mit der die Behälter versiegelt werden.

Für voneinander verschiedene Behälter kann das Verwenden voneinander verschiedener Werkzeuge erforderlich sein. Zum einen ist das Unterwerkzeug an die Form der Behälter angepasst, zum anderen können mit dem Unterwerkzeug und mit dem Oberwerkzeug voneinander verschiedene Anzahlen von Behältern in einem Arbeitsgang versiegelt werden.

Für das somit notwendige Wechseln der Werkzeuge einer Einrichtung ist in der DE 102 09 000.9 ein Fahrgestell vorgeschlagen worden, mit dem ein Werkzeug aufgenommen werden kann, an eine technische Einrichtung abgegeben werden kann und transportiert werden kann. Dieses Fahrgestell weist Abschnitte auf, die an eine Unterseite einer technischen Einrichtung anlegbar sind.

Bei einer technischen Einrichtung, die im Bodenbereich keinen Freiraum zum Anlegen von derartigen Abschnitten aufweist, ist dieses bekannte Fahrgestell nicht ohne Weiteres anwendbar.

Eine in der US 6,454,512 B1 gattungsgemäße Anordnung wird einer Einrichtung angenähert, indem ein an der Einrichtung angeordneter Stift umgriffen wird.

Der Erfindung liegt die Aufgabe zu Grunde, eine Anordnung der eingangs genannten Gattung aufzuzeigen, die ein Überführen von Funktionsteilen auf ein Fahrgestell und umgekehrt universell bei einer Vielzahl von technischen Einrichtungen ermöglicht.

Diese Aufgabe ist erfindungsgemäß dadurch gelöst, dass jedes Greifelement eine Einhängeöse ist und dass das Fahrgestell Räder hat und dass die Räder am Fahrgestell höhenveränderbar aufgenommen sind.

Bei der erfindungsgemäßen Anordnung sind Maßnahmen an der technischen Einrichtung selbst wie an einem Fahrgestell vorgesehen. Beide Bauteile werden mit Mitteln ausgerüstet, die eine enge Anlage des Fahrgestells an der technischen Einrichtung ermöglichen.

An der technischen Einrichtung ist dazu das Anschlagelement angeordnet. Das Fahrgestell weist ein Greifelement auf, das mit dem Anschlagelement in

Eingriff bringbar ist. Dadurch ist eine lagefeste Zuordnung des Fahrgestells zur technischen Einrichtung ermöglicht.

Die Verbindung zwischen technischer Einrichtung und Fahrgestell findet somit oberhalb eines Bodens der technischen Einrichtung statt, nämlich dort, wo die Anschlagelemente an der technischen Einrichtung angeordnet sind. Diese Anschlagelemente können an den verschiedensten technischen Einrichtungen angeordnet sein, so dass eine universale Zuordnung des Fahrgestells zu technischen Einrichtungen ermöglicht ist.

Die Anschlagelemente sind als Vorsprünge ausgebildet, während die Greifelemente die Vorsprünge hinterfassen. Durch das Hinterfassen von Vorsprüngen durch Greifelemente ist eine lagesichere Verbindung ermöglicht. Die Verbindung kann dabei gleichwohl schnell ausgeführt werden, um das Zuführen bzw. Wegführen von Funktionsteilen zu der technischen Einrichtung bzw. von der technischen Einrichtung nicht zu verzögern. Jeder Vorsprung kann dabei ein Bolzen sein.

Um insbesondere das Anordnen der Greifelemente an den Vorsprüngen zu beschleunigen, ist nach der Erfindung jedes Greifelement eine Einhängeöse. Diese Einhängeöse ist in einfacher Weise an einem Vorsprung, z. B. einem Bolzen, anschlagbar, in den sie einfach eingehängt wird.

Nach der Erfindung ist noch vorgesehen, dass das Fahrgestell Räder hat und dass die Räder am Fahrgestell höhenveränderbar aufgenommen sind. Mit den Rädern ist dabei die Verfahrbarkeit des Fahrgestelles gewährleistet. Die Höhenveränderbarkeit der Räder ermöglicht eine Anpassung des Fahrgestells an verschiedene technische Einrichtungen mit in verschiedenen Höhenlagen angeordneten Anschlagelementen.

Damit die Lagezuordnung auch über einen längeren Zeitraum z. B. für die Übergabe oder Übernahme eines Werkzeuges stabil erhalten bleibt, ist nach einer ersten Weiterbildung der Erfindung an dem Fahrgestell wenigstens ein bei Eingriff des Greifelementes an der technischen Einrichtung definiert anliegendes Anlageelement angeordnet. Dieses Anlageelement wird an die technische Einrichtung angelegt, dabei ist aber keine Anlage an der Unterseite der technischen Einrichtung notwendig. Die Anlage an der technischen Einrichtung dient nur noch dem Aufrechterhalten einer sicheren Ruheposition, wenn das Greifelement mit dem Anschlagelement in Eingriff steht.

Die Anschlagelemente für das Fahrgestell sind vorzugsweise in einem oberen Bereich einer technischen Einrichtung angeordnet. Die Greifelemente sind dann in gleicher Weise in einem oberen Abschnitt eines Fahrgestells angeordnet, so dass das Ergreifen der Anschlagelemente durch die Greifelemente im oberen Bereich des Fahrgestelles erfolgt. Das Fahrgestell wird dadurch im oberen Bereich an den Greifelementen quasi aufgehängt, durch seinen tiefer angeordneten Schwerpunkt wird es gegen die technische Einrichtung gedrückt.

In diesem Bereich der Anlage des Fahrgestells an der technischen Einrichtung ist zunächst vorzugsweise das Anlageelement angeordnet. Das Anlageelement ist vorzugsweise als Anlagefläche ausgebildet, welche in einfacher Weise gegen eine entsprechende Gegenfläche einer technischen Einrichtung zu führen ist und an dieser anliegen kann. Das Anlageelement ist dabei in einem unteren Bereich des Fahrgestells angeordnet, so dass es entsprechend unterhalb der Greifelemente befindlich ist.

Vorzugsweise sind jeweils in Annäherungsrichtung an die technischen Einrichtungen vorn angeordnete Räder und hinten angeordnete Räder des Fahrgestells zu Gruppen mit gemeinsamer Ansteuerung ihrer Höhenveränderbarkeit zusammengefasst. Nach dieser Weiterbildung sind z. B. zwei vordere Räder gemeinsam höher oder tiefer anordbar und sind z. B. hinten angeordnete Räder gemeinsam höhenverstellbar. Diese Trennung der Höhenveränderbarkeit kann dann in einer vereinfachten Annäherung an die technische Einrichtung ausgenutzt werden. So sind durch eine stärkere Höherstellung der hinteren Räder vordere Abschnitte des Fahrgestells etwas nach vorn kippbar. Sind in diesen vorderen Abschnitten die Greifelemente angeordnet, so werden diese etwas nach vorn geführt, um ein Umgreifen der Einsteckelemente zu erleichtern. Anschließend können dann die hinteren Räder wieder niedriger eingestellt werden und alle Räder so niedrig eingestellt werden, dass sich das Anlageelement des Fahrgestells an die technische Einrichtung anlegt.

Jedes Rad ist dabei vorzugsweise als Lenkrolle mit einer 360°-Drehbarkeit ausgebildet.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht eines Fahrgestells mit einer Funktionsteilaufnahmeeinrichtung,
- Fig. 2:: eine perspektivische Ansicht einer Einrichtung zum automatischen Versiegeln von Behältern und
- Fig. 3:: eine maßstäblich vergrößerte Ansicht der Einzelheit III in Fig. 2 und
- Fig. 4:: eine perspektivische Ansicht der technischen Einrichtung gemäß Fig. 2 und des Fahrgestells gemäß Fig. 1 bei Anlage des Fahrgestells an der technischen Einrichtung.

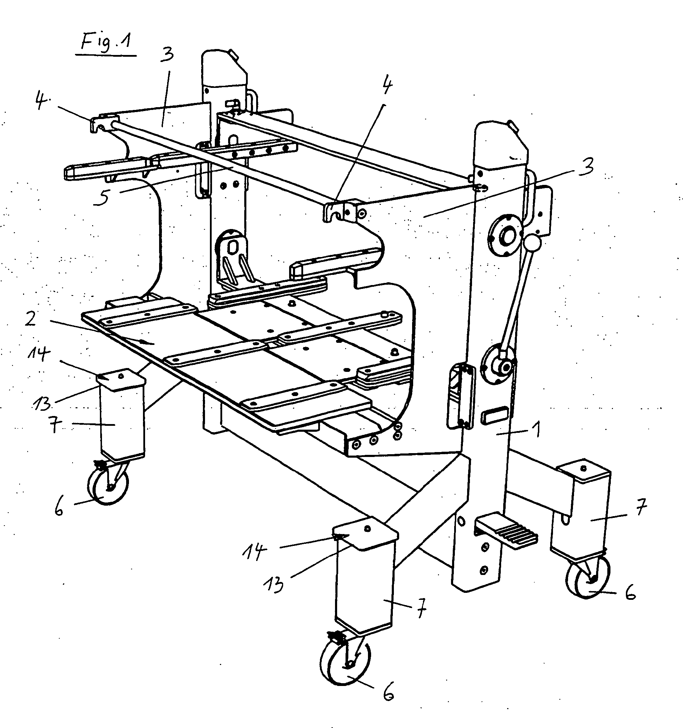

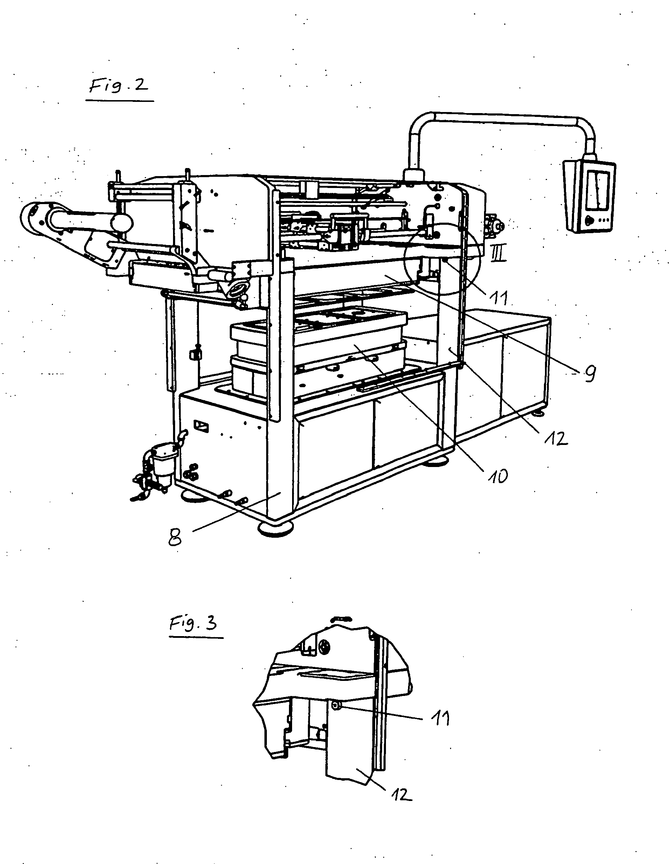

Das Fahrgestell in Fig. 1 ist Teil der erfindungsgemäßen Anordnung. Das Fahrgestell weist einen aus Profilen zusammengesetzten Gestellaufbau 1 auf. Dieser Gestellaufbau 1 trägt eine Funktionsteilaufnahmeeinrichtung 2, mit welcher beispielsweise ein Siegelwerkzeug der technischen Einrichtung nach Fig. 2 aufgenommen werden kann.

An Seitenwänden 3 des Gestellaufbaus 1 sind an dem Fahrgestell zwei Einhängeösen 4 angeordnet. Beide Einhängeösen 4 sind mit einem Stangenprofil 5 miteinander verbunden, um den definierten Abstand zwischen beiden Einhängeösen 4 zu stabilisieren.

Der Gestellaufbau 1 des Fahrgestells steht auf vier Rädern 6 auf. Jedes Rad 6 ist höhenveränderbar in einem Teleskopzylinder gehalten, der in einer Teleskopzylinderaufnahme 7 angeordnet ist. Durch ein Aus- bzw. Einfahren der um 360° drehbaren Räder 6 verändert sich die Höhenanordnung des Gestellaufbaus 1 über einem nicht weiter dargestellten Boden.

Die technische Einrichtung in Fig. 2 weist gleichfalls ein Gestell 8 auf. Dies Gestell 8 trägt die Funktionsteile der technischen Einrichtung, unter anderem ein Oberwerkzeug 9 und ein Unterwerkzeug 10. Diese Werkzeuge 9, 10 dienen dem Versiegeln von z.B. Schalen. Beim Unterwerkzeug 10 ist zu erkennen, daß dieses Werkzeug 10 für die Aufnahme von drei Schalen in einem Siegelvorgang geeignet ist. Wenn andere Schalen versiegelt werden sollen, ist das Unterwerkzeug 10 und gegebenenfalls das Oberwerkzeug 9 aus der technischen Einrichtung zu entnehmen und durch ein anderes Werkzeug jeweils zu ersetzen.

Für eine Annäherung des Fahrgestells nach Fig. 1 ist die technische Einrichtung in Fig. 2 mit Bolzen 11 ausgerüstet, die auch in Fig. 3 dargestellt sind. Die Bolzen 11 stehen von einer benachbarten Wandung 12 der technischen Einrichtung vor, so daß sie eine Eingriffsmöglichkeit für die Einhängeösen 4 ausbilden.

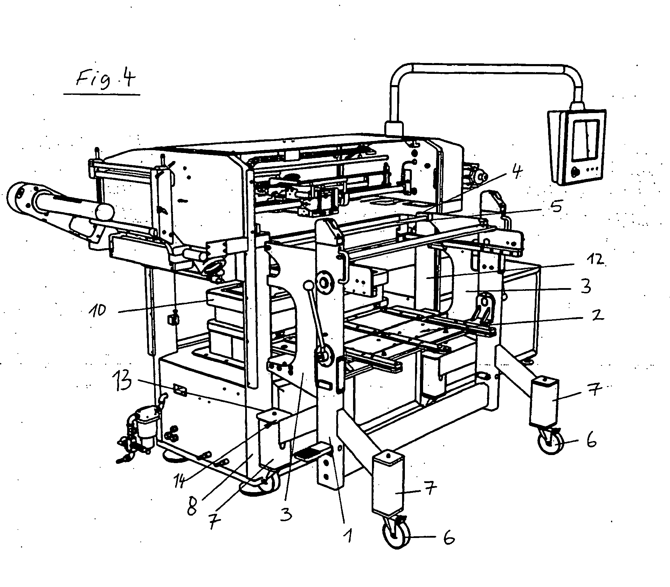

Fig. 4 zeigt den eingehängten Zustand des Fahrgestells an der technischen Einrichtung. Die Einhängeösen 4 sind mit den Bolzen 11 in Eingriff gebracht. Der Gestellaufbau 1 liegt mit vorderen Teleskopzylinderaufnahmen 7 an der technischen Einrichtung an. Diese Anlage erfolgt bei der technischen Einrichtung an dem Gestell 8. Beim Fahrgestell sind an der Vorderseite der vorderen Teleskopzylinderaufnahmen 7 Anlageflächen 13 vorgesehen. Diese Anlageflächen 13 sind z.B. durch die vorderen Kanten von den Teleskopzylinderaufnahmen 7 oben abschließenden Deckelelementen 14 ausgebildet.

## Patentansprüche

1. Anordnung zum Aufnehmen und Übergeben und/oder Transportieren wenigstens eines Funktionsteils, insbesondere eines Werkzeuges, einer technischen Einrichtung, insbesondere einer Einrichtung zum automatischen Versiegeln von Behältern, umfassend wenigstens ein Fahrgestell (1), das eine Funktionsteilaufnahmeeinrichtung (2) trägt, wobei
die Anordnung an der technischen Einrichtung angeordnete Anschlagelemente (11) für das Fahrgestell umfasst, wobei
an dem Fahrgestell (1) mit den Anschlagelementen in Eingriff bringbare Greifelemente (4) angeordnet sind, wobei
die Anschlagelemente (11) als Vorsprünge ausgebildet sind und, wobei
die Greifelemente (4) die Vorsprünge hinterfassen,
**dadurch gekennzeichnet, dass**
jedes Greifelement eine Einhängeöse (4) ist und, dass
das Fahrgestell Räder (6) hat und dass die Räder (6) am Fahrgestell höhenveränderbar aufgenommen sind.

2. Anordnung nach Anspruch 1, **dadurch gekennzeichnet, dass** an dem Fahrgestell wenigstens ein bei Eingriff des Greifelementes an der technischen Einrichtung definiert anliegendes Anlageelement angeordnet ist.

3. Anordnung nach einem der vorhergehenden Ansprüche, **dadurch gekennzeichnet, dass** jeder Vorsprung ein Bolzen (11) ist.

4. Anordnung nach einem der vorhergehenden Ansprüche, **dadurch gekennzeichnet, dass** das Greifelement in einem oberen Abschnitt des Fahrgestells angeordnet ist.

5. Anordnung nach einem der Ansprüche 2 bis 4, **dadurch gekennzeichnet, dass** das Anlageelement des Fahrgestells eine Anlagefläche (13) ist.

6. Anordnung nach einem der Ansprüche 2 bis 5, **dadurch gekennzeichnet, dass** das Anlageelement in einem unteren Bereich des Fahrgestells angeordnet ist.

7. Anordnung nach einem der vorhergehenden Ansprüche, **dadurch gekennzeichnet, dass** jeweils in Annäherungsrichtung an die technische Einrichtung vorne angeordnete Räder (6) und hinten angeordnete Räder (6) zu Gruppen mit gemeinsamer Ansteuerung ihrer Höhenveränderbarkeit zusammengefaßt sind.

8. Anordnung nach Anspruch 9 oder 10, **dadurch gekennzeichnet, dass** jedes Rad (6) als Lenkrolle mit einer 360°-Drehbarkeit ausgebildet ist.

## Claims

1. Arrangement for accommodating and handing over and/or transporting at least one functional part, particularly a tool, of a technical apparatus, particularly an apparatus for the automatic sealing of containers, comprising at least one chassis (1) which carries a functional-part accommodation apparatus (2), wherein
the arrangement comprises stop elements (11) for the chassis arranged on the technical apparatus, wherein
gripping elements (4), which can be brought into engagement with the stop elements, are arranged on the chassis (1), wherein
the stop elements (11) are constructed as projections and wherein the gripping elements (4) engage behind the projections,
**characterised in that**
each gripping element is a suspension eye (4) and, **in that**
the chassis has wheels (6) and **in that** the wheels (6) are accommodated in a height-adjustable manner on the chassis.

2. Arrangement according to Claim 1, **characterised in that** at least one bearing element bearing in a defined manner against the technical apparatus in the case of the engagement of the gripping element is arranged on the chassis.

3. Arrangement according to any one of the preceding claims, **characterised in that** each projection is a bolt (11).

4. Arrangement according to any one of the preceding claims, **characterised in that** the gripping element is arranged in an upper section of the chassis.

5. Arrangement according to any one of Claims 2 to 4, **characterised in that** the bearing element of the chassis is a bearing surface (13).

6. Arrangement according to any one of Claims 2 to 5, **characterised in that** the bearing element is arranged in a lower region of the chassis.

7. Arrangement according to any one of the preceding claims, **characterised in that** in each case, wheels (6) arranged at the front and wheels (6) arranged at the rear in the direction of approach to the technical apparatus are combined to form groups with common control of their height adjustability.

8. Arrangement according to Claim 9 or 10, **characterised in that** each wheel (6) is constructed as a steering roller with 360° rotatability.

## Revendications

1. Dispositif de réception et transmission et/ou transport d'au moins une pièce fonctionnelle, notamment un outil, d'un dispositif technique, notamment d'un dispositif de scellement automatique de récipients, comprenant au moins un châssis (1), qui supporte un dispositif de réception de pièce fonctionnelle (2), dans lequel
le dispositif comprend des éléments de butée (11) destinés au châssis disposés sur le dispositif technique, dans lequel
des éléments de préhension (4) pouvant être amenés en contact avec les éléments de butée sont disposés sur le châssis (1), dans lequel
les éléments de butée (11) sont réalisés comme des protubérances, dans lequel les éléments de préhension (4) viennent en prise par derrière avec les protubérances,
**caractérisé en ce que**
chaque élément de préhension est un oeillet de suspension (4) et **en ce que**
le châssis comporte des roues (6) et **en ce que** les roues (6) sont reçues de manière variable en hauteur sur le châssis.

2. Dispositif selon la revendication 1, **caractérisé en ce que** sur le châssis est disposé au moins un élément de positionnement venant reposer de manière définie sur le dispositif technique lors d'une intervention de l'élément de préhension.

3. Dispositif selon une des revendications précédentes, **caractérisé en ce que** chaque protubérance est un boulon (11).

4. Dispositif selon une des revendications précédentes, **caractérisé en ce que** l'élément de préhension est disposé dans une portion supérieure du châssis.

5. Dispositif selon une des revendications 2 à 4, **caractérisé en ce que** l'élément de positionnement du châssis est une surface de positionnement (13).

6. Dispositif selon une des revendications 2 à 5, **caractérisé en ce que** l'élément de positionnement est disposé dans une zone inférieur du châssis.

7. Dispositif selon une des revendications précédentes, **caractérisé en ce que** des roues (6) disposées à l'avant et des roues disposées à l'arrière (6) respectivement dans la direction d'approche du dispositif technique sont réunies en groupes avec pilotage commun de leur faculté de variation en hauteur.

8. Dispositif selon la revendication 9 ou 10, **caractérisé en ce que** chaque roue (6) est réalisée comme une roulette avec une faculté de rotation à 360°.
